# EUROPEAN PATENT APPLICATION

(11) **EP 2 141 936 A1**
(43) Date of publication of application: **06.01.2010**
(21) Application number: 08703372.6
(22) Date of filing: 17.01.2008
(51) Int. Cl.: H04Q 7/36, H04L 12/56, H04Q 7/38

(54) **MOBILE COMMUNICATION SYSTEM, NETWORK DEVICE AND PACKET SEQUENCE CONTROL METHOD**

(30) Priority: 27.03.2007 JP 2007081716
(71) Applicant: NEC Corporation, Minato-ku Tokyo 108-8001 (JP)
(72) Inventor: KUBOTA, Mitsuhiro, Tokyo 108-8001 (JP)
(74) Representative: Glawe, Delfs, Moll
(86) International application number: PCT/JP2008/050517
(87) International publication number: WO 2008/117551

(57) **Abstract**

A first network apparatus transmits data via a plurality of sequenced packets. A second network apparatus sets a packet holding time to be an appropriate value for every service class, and holds an earlier arriving packet up to the maximum packet holding time when an earlier transmitted packet from the first network apparatus is overtaken and a later transmitted packet arrives earlier. In addition, the second network apparatus rearranges the packets in the transmitted sequence if the overtaken packet arrives during the packet holding time, and gives up rearranging the packets in the transmitted sequence if the overtaken packet does not arrive during the packet holding time.

## Description

### [Technical Field]

The present invention relates to a mobile communication system that enables communication of various kinds of service classes.

### [Background Art]

A network of a mobile communication system has changed from an Asynchronous Transfer Mode (ATM) network to an Internet Protocol (IP) network.

In a 3rd generation mobile communication system, a General Packet Radio Service (GPRS) Tunneling Protocol (GTP) is used for communication controlling between a radio access network and a core network. In the 3rd generation mobile communication system, user data are transmitted via packets. A GTP-User plane (GTP-U) is used for user data packet communication between the radio access network and the core network.

Generally, the inversion of packet order arrival sometimes happens in the IP network. In addition, unifying a radio control apparatus and a radio base station of the radio access network into one node (integrated radio base station) has been examined in Long Time Evolution (LTE). In this case, the core network and the integrated radio base station are connected to the IP network. A plurality of routers may be interposed between the core network and the integrated radio base station in the IP network. If the number of the interposed routers increases, the probability is higher that the arriving sequence of packets will be inverted.

With respect to this, the GTP-U prepares a function for giving a sequence number to a transmitted packet, detecting the sequence of an arriving packet from its sequence number, and correctly rearranging the order of the packets. A packet processing unit of an apparatus terminating the GTP-U monitors the sequence number of an arriving packet, and recognizes that the arriving sequence of the packets has been inverted if a sequence number is missing. After detecting the reversing of the arriving sequence of the packets, the packet processing unit holds an earlier arriving packet up to a specified time, and awaits arrival of an earlier transmitted packet than the earlier arriving packet. If the awaited packet arrives during the certain time, the packet processing unit rearranges the packets in the sequence number order and outputs the packets. If the awaited packet does not arrive during the specified time, the packet processing unit outputs the held packet, and abandons the awaited packet if it arrives afterwards.

Meanwhile, data transmission using packets has been variously used not only for a non-real time service such as file transmission or for looking into web information but also as a real time service such as streaming or VolP. In a real time service, delay considerably affects the quality of service.

As described above, a mobile communication system is required to deal with data of a few service classes. Since the required conditions for a delay time in a network are changed according to service classes, control based on the service classes may be applied (e.g. refer to Japanese Laid-Open Patent Gazette No. 2002-152223).

### [Disclosure]

As set forth herein, control for correctly rearranging the sequence of the packets using the sequence numbers is performed in the GTP-U. However, since this control does not consider service classes, it cannot be said that appropriate packet sequence control for every service class is performed. Since the service classes dealt in the mobile communication system are diversified and a data transmission range to the IP network is widened, the influence of delay based on the packet sequence control in the GTP-U may become important.

An object of the present invention is to provide a mobile communication system which can perform appropriate packet sequence controlling for every service class.

In order to accomplish the above object, according to one aspect of the present invention, there is provided a mobile communication system which can provide a plurality of services of different service classes, the mobile communication system including a first network apparatus that transmits data via a plurality of sequenced packets, and a second network apparatus that can receive the packets transmitted from the first network apparatus, sets a packet holding time for holding an earlier arriving packet for every service class so as to await an earlier transmitted packet when restoring the sequence of the packets, holds the earlier arriving packet up to the packet holding time at the maximum when an earlier transmitted packet from the first network apparatus is overtaken and a later transmitted packet arrives earlier, rearranges the packets in the transmitted sequence if the overtaken packet arrives during the packet holding time, and gives up rearranging the packets in the transmitted sequence if the overtaken packet does not arrive during the packet holding time.
According to another aspect of the present invention, there is provided a network apparatus which receives sequenced transmitted packets and transmits data of the packets in a mobile communication system which can provide a plurality of services of different service classes, the network apparatus including a packet processing unit that sets a packet holding time for holding an earlier arriving packet for every service class so as to await an earlier transmitted packet when restoring the sequence of the packets, holds the earlier arriving packet up to the maximum packet holding time when an earlier transmitted packet is overtaken and a later transmitted packet arrives earlier among the plurality of packets transmitted in sequence, outputs data of the packets rearranged in the transmitted sequence if the overtaken packet arrives during the packet holding time, and gives up rearranging the packets in the transmitted sequence and outputs data of the held packet if the overtaken packet does not arrive during the packet holding time, and a data processing unit that transmits the data of the packet output from the packet processing unit.

According to a further aspect of the present invention, there is provided a packet sequence control method in a mobile communication system which can provide a plurality of services of different service classes, the packet sequence control method that sets a packet holding time for holding an earlier arriving packet for every service class so as to await an earlier transmitted packet when restoring the sequence of the packets, holds the earlier arriving packet up to the maximum packet holding time when an earlier transmitted packet is overtaken and a later transmitted packet arrives earlier, outputs data of the packets rearranged in the transmitted sequence if the overtaken packet arrives during the packet holding time, and gives up rearranging the packets in the transmitted sequence and outputs data of the held packet if the overtaken packet does not arrive during the packet holding time.

### [Description of Drawings]

FIG. 1 is a block diagram illustrating a configuration of a mobile communication system of one exemplary embodiment;
FIG. 2 is a block diagram illustrating a construction of radio control apparatus 11;
FIG. 3 is a sequence diagram illustrating an operation of the mobile communication system when establishing a bearer for data communication;
FIG. 4 is a sequence diagram illustrating an operation of the mobile communication system when the sequence of packets transmitted from core network 10 to radio control apparatus 11 has been inverted; and
FIG. 5 is a block diagram illustrating a configuration of a mobile communication system of another exemplary embodiment.

### [Mode for Invention]

Exemplary embodiments for carrying out the present invention will be described in detail with reference to the drawings.

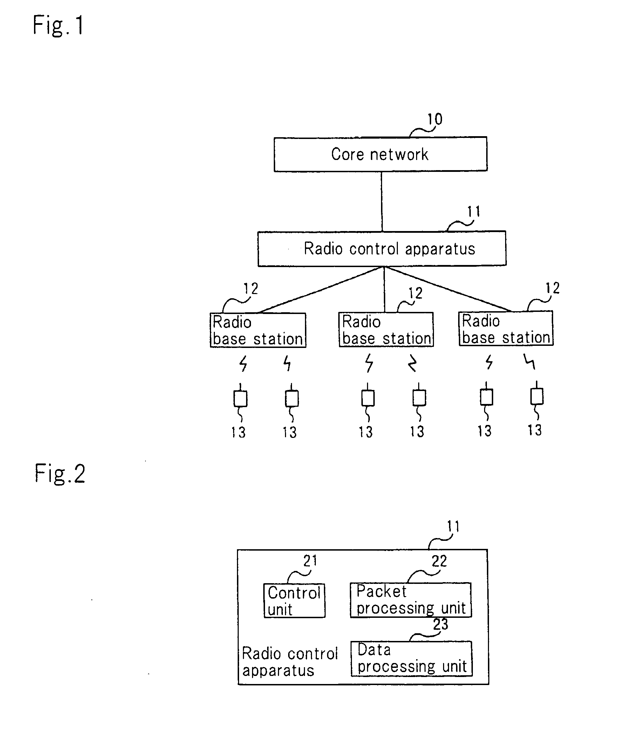

FIG. 1 is a block diagram illustrating a configuration of a mobile communication system of one exemplary embodiment. Referring to FIG. 1, the mobile communication system includes core network 10, radio control apparatus 11 and radio base station 12. Radio control apparatus 11 and radio base station 12 belong to radio access network. An ATM network or IP network is between core network 10 and the radio access network, and user data are transmitted via packets.

Core network 10, which is an exchange network composed of a plurality of nodes (not shown), has a function for providing information on a service class (or Quality of Service (QoS)) required by a user to the radio access network, and a function for switching data transmitted and received to/from terminal 13. Sequence numbers are given to the packets of user data transmitted from core network 10 to radio control apparatus 11 of the radio access network.

Radio control apparatus 11 is connected to core network 10, accommodates radio base station 12, establishes a bearer according to the required service class, and transmits and receives data of terminal 13 to/from radio base station 12. An ATM network or IP network is between core network 10 and radio control apparatus 11, and radio control apparatus 11 processes the packets of user data received from core network 10, and transmits the user data to radio base station 12.

Here, radio control apparatus 11 monitors the sequence of an arriving packet based on its sequence number as a packet sequence monitoring process. When detecting that the arriving sequence of the packets has been inverted by the packet sequence monitoring process, radio control apparatus 11 rearranges the packets in the sequence number order by using a packet rearranging process.

Radio control apparatus 11 sets a time for holding an earlier arriving packet (hereinafter, referred to as 'packet holding time') to be an appropriate value for every service class so as to await an earlier transmitted packet for the packet rearranging process.

For example, required conditions for a delay time are less strict in a non-real time service, such as file transmission, or such as looking into web information, than a real time service such as streaming or VoIP. That is, the non-real time service allows a longer delay time than the real time service. Therefore, it is preferable to set a packet holding time of the non-real time service to be longer than a packet holding time of the real time service. As a result, in the non-real time service, as more packets are restored to the original sequence, it is possible to reduce the number of times of packet retransmission in the TCP. In addition, in the real time service, since the packet holding time is set shorter to reduce packet delay, it is possible to secure quality of service.

Moreover, among the real time services, streaming allows a longer delay time than a call service. Accordingly, it is preferable to set a packet holding time of the streaming to be longer than a packet holding time of the call service.

Further, in the packet rearranging process, radio control apparatus 11 holds an earlier arriving packet up to the maximum packet holding time based on the service class, and awaits arrival of an earlier transmitted packet than the earlier arriving packet. If the awaited packet arrives during the packet holding time, radio control apparatus 11 rearranges the packets in the sequence number order and transmits data to radio base station 12. If the awaited packet does not arrive during the packet holding time, radio control apparatus 11 gives up restoring the packets to the original sequence.

As an example of an operation of radio control apparatus 11 which gives up restoring the packets to the original sequence, radio control apparatus 11 may output the held packet, and abandon the awaited packet if it arrives afterwards. This operation is very suitable for real time service, and thus may be limitedly applied to real time service.

In addition, as another example of the operation of radio control apparatus 11 which gives up restoring the packets to the original sequence, radio control apparatus 11 may output the held packet, and output the awaited packet in the arriving sequence if it arrives afterwards.

Radio base station 12 is connected to radio control apparatus 11, and also is connected to terminal 13 by wireless to transmit and receive data.

FIG. 2 is a block diagram illustrating the construction of radio control apparatus 11. Referring to FIG. 2, radio control apparatus 11 includes control unit 21, packet processing unit 22 and data processing unit 23.

Control unit 21 terminates both a control signal to core network 10 and a control signal to radio base station 12, and controls respective units of radio control apparatus 11 including packet processing unit 22 and data processing unit 23. When establishing a bearer, control unit 21 notifies service class information representing a service class of a call which is the object of the bearer to packet processing unit 22.

Packet processing unit 22 performs packet sequence control on packets transmitted and received to/from core network 10. Packet sequence control includes the packet sequence monitoring process and the packet rearranging process described above. Packet processing unit 22 memorizes the packet holding time for every service class in advance, and uses the same for the packet rearranging process.

In the packet sequence monitoring process, while transmitting the packet received from core network 10 to data processing unit 23, packet processing unit 22 monitors the sequence of an arriving packet based on a sequence number given to the packet. In detail, packet processing unit 22 monitors the sequence number of the arriving packet from core network 10, and recognizes that the arriving sequence of the packets has been inverted if a sequence number is missing. At this time, packet processing unit 22 executes the packet rearranging process.

In the packet rearranging process, packet processing unit 22 rearranges the packets, which have been detected as being inverted by the packet sequence monitoring process, in the sequence number order, and transmits the packets to data processing unit 23. Concretely, packet processing unit 22 holds an earlier arriving packet up to the packet holding time corresponding to the service class, and awaits arrival of an earlier transmitted packet than the earlier arriving packet. If the awaited packet arrives during the packet holding time, packet processing unit 22 rearranges the packets in the sequence number order and transmits the packets to data processing unit 23. If the awaited packet does not arrive during the packet holding time, packet processing unit 22 gives up restoring the packets to the original sequence. For example, packet processing unit 22 may output the held packet, and output the awaited packet in the order of arrival if it arrives afterward. In another instance, packet processing unit 22 may output the held packet, and abandon the awaited packet if it arrives afterwards.

Data processing unit 23 processes the packets from packet processing unit 22 to extract user data, and transmits user data to radio base station 12.

An operation of the mobile communication system will be explained.

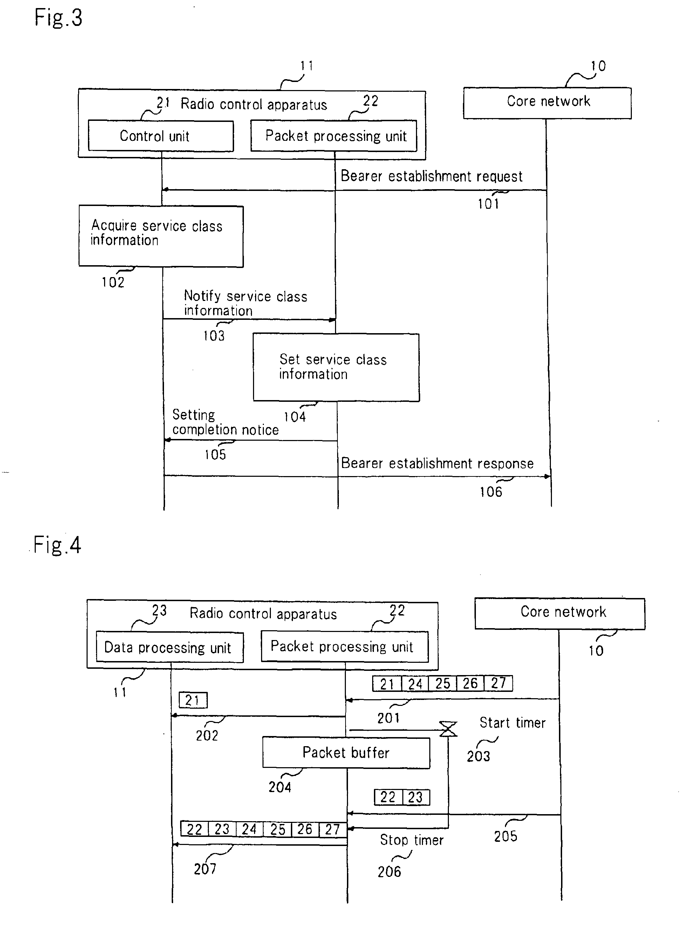

FIG. 3 is a sequence diagram illustrating an operation of the mobile communication system when establishing a bearer for data communication. Referring to FIG. 3, first of all, radio control apparatus 11 receives a bearer establishment request from core network 10 (step 101). In radio control apparatus 11, control unit 21 acquires service class information contained in the bearer establishment request message received from core network 10 (step 102).

The service classes include at least 'conversational', 'streaming', 'interactive' and 'background'. 'Conversational' and 'streaming' belong to real time service, and 'interactive' and 'background' belong to the non-real time service.

Thereafter, control unit 21 establishes a bearer according to the acquired service class information, and notifies the service class information to packet processing unit 22 (step 103). Packet processing unit 22 sets the service class information notified by control unit 21 (step 104). Since packet processing unit 22 memorizes the packet holding time for every service class, the packet holding time used for the packet rearranging process is determined by the service class information. Packet processing unit 22 sets the packet holding time with the service class information. Here, the set packet holding time is longer in the non-real time service than in the real time service.

After completing the setting, packet processing unit 22 transmits a setting completion notice to control unit 21 (step 105). When receiving the setting completion notice from packet processing unit 22, control unit 21 finishes establishment of the bearer, and transmits a bearer establishment response to core network 10 (step 106).

FIG. 4 is a sequence diagram illustrating an operation of the mobile communication system when the sequence of the packets transmitted from core network 10 to radio control apparatus 11 has been inverted. Referring to FIG. 4, radio control apparatus 11 receives consecutive packets of user data from core network 10 (step 201).

Packet processing unit 22 of radio control apparatus 11 confirms a sequence number of the received packet, and holds a succeeding packet in a buffer and drives a timer for counting packet holding time if a sequence number is missing.

Here, packets of sequence numbers 24 to 27 arrive at radio control apparatus 11 earlier due to delay of packets of sequence numbers 22 and 23.

In radio control apparatus 11, first of all, packet processing unit 22 transmits a packet having sequence number 21 to data processing unit 23 (step 202). Next, packet processing unit 22 drives the timer for counting the packet holding time, and awaits the packets having sequence numbers 22 and 23 (step 203). While awaiting the packets having sequence numbers 22 and 23, packet processing unit 22 holds the packets having sequence number 24 and larger in the buffer (step 204).

In this example, packets having sequence numbers 22 and 23 arrive at radio control apparatus 11 before expiration of the timer (step 205). When receiving the packets having sequence numbers 22 and 23, packet processing unit 22 stops the timer (step 206). Thereafter, packet processing unit 22 rearranges the packets in the sequence number order and transmits the packets to data processing unit 23 (step 207).

As explained above, according to this exemplary embodiment, radio control apparatus 11 sets a packet holding time for holding an earlier arriving packet to be an appropriate value for every service class so as to await an earlier transmitted packet when restoring the sequence of the packets. In addition, radio control apparatus 11 holds the earlier arriving packet up to the maximum packet holding time if a sequence number is missing among the arriving packets, and rearranges the packets in the sequence number order if an overtaken packet arrives during the packet holding time. Since an appropriate packet holding time is used for every service class, appropriate packet sequence control can be performed for every service class.

Also, according to this exemplary embodiment, in real time service, when the awaited packet does not arrive during the packet holding time, radio control apparatus 11 abandons the awaited packet if it arrives afterwards. In the real time service, a packet arriving with a delay time exceeding an allowable range is abandoned in terminal 13. This operation serves to prevent wire and wireless resources from being unnecessarily used to transmit data to be abandoned.

Another exemplary embodiment of the present invention will be described.

Unifying a radio control apparatus and a radio base station into one node has been examined in Long Time Evolution (LTE). This exemplary embodiment shows an application example of the present invention to the LTE. Here, the node where the radio control apparatus and the radio base station are integrated is referred to as an integrated radio base station.

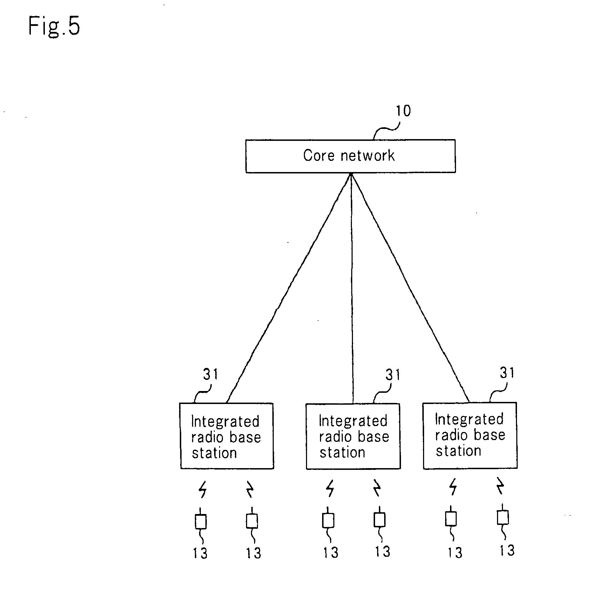

FIG. 5 is a block diagram illustrating a configuration of a mobile communication system of another exemplary embodiment. Referring to FIG. 5, the mobile communication system includes core network 10 and integrated radio base station 31.

Integrated radio base station 31 has the functions both of radio control apparatus 11 and radio base station 12 of FIG. 1. In order to execute the function of the radio control apparatus, integrated radio base station 31 includes control unit 21, packet processing unit 22 and data processing unit 23 of FIG. 2. Integrated radio base station 31 can perform the operations shown in FIGS. 3 and 4 via control unit 21, packet processing unit 22 and data processing unit 23. In addition, integrated radio base station 31 can perform appropriate packet sequence control for every service class.

In the meantime, in the respective exemplary embodiments described above, the present invention has been applied to packet sequence control for downlink user data from core network 10 to radio access network, but is not limited thereto. Packet sequence control of the present invention can be applied to uplink user data from the radio access network to core network 10. In this case, for packet sequence control, core network 10 may perform the operation of radio control apparatus 11 described above, and radio control apparatus 11 may perform the operation of core network 10 described above. In particular, a node of core network 10 includes control unit 21, packet processing unit 22 and data processing unit 23 of FIG. 2, and executes packet sequence control shown in FIGs. 3 and 4 via the respective units. Accordingly, it is possible to perform appropriate packet sequence control for every service class with respect to the uplink user data.

While the present invention has been described in connection with the exemplary embodiments, the present invention is not limited thereto and is defined by the appended claims. Therefore, it will be understood by those skilled in the art that various modifications and changes can be made to the construction or details of the present invention within the scope of the present invention.

This application claims priority based on Japanese Patent Application No. 2007-081716 filed on March 27, 2007, the entire contents of which are incorporated herein by reference.

## Claims

1. A mobile communication system which can provide a plurality of services of different service classes, the mobile communication system comprising:
a first network apparatus that transmits data via a plurality of sequenced packets; and
a second network apparatus that can receive the packets transmitted from the first network apparatus, sets a packet holding time for holding an earlier arriving packet for every service class so as to await an earlier transmitted packet when restoring the sequence of the packets, holds the earlier arriving packet up to the maximum packet holding time when an earlier transmitted packet from the first network apparatus is overtaken and a later transmitted packet arrives earlier, rearranges the packets in the transmitted sequence if the overtaken packet arrives during the packet holding time, and gives up rearranging the packets in the transmitted sequence if the overtaken packet does not arrive during the packet holding time.

2. The mobile communication system according to claim 1, wherein the first network apparatus is a core network apparatus included in a core network of the mobile communication system, and transmits the data to a terminal via the plurality of sequenced packets, and
the second network apparatus is a radio access network apparatus included in a radio access network which is connected to the core network and accommodates the terminal by a wireless loop, and when an earlier transmitted packet from the first network apparatus is overtaken and a later transmitted packet arrives earlier, the second network apparatus transmits data of the packets rearranged in the transmitted sequence to the terminal if the overtaken packet arrives during the packet holding time, and gives up rearranging the packets in the transmitted sequence and transmits data of the held packet to the terminal if the overtaken packet does not arrive during the packet holding time.

3. The mobile communication system according to claim 1, wherein the second network apparatus sets a packet holding time of a non-real time service to be longer than a packet holding time of a real time service.

4. The mobile communication system according to claim 1, wherein the second network apparatus sets a packet holding time of streaming to be longer than a packet holding time of a call service among real time services.

5. The mobile communication system according to claim 1, wherein, when giving up rearranging the packets in the transmitted sequence in a real time service, the second network apparatus transmits the held packet, and abandons the overtaken packet if it arrives afterward.

6. A network apparatus which receives sequenced transmitted packets and transmits data of the packets in a mobile communication system which can provide a plurality of services of different service classes, the network apparatus comprising:
packet processing means that sets a packet holding time for holding an earlier arriving packet for every service class so as to await an earlier transmitted packet when restoring the sequence of the packets, holds the earlier arriving packet up to the maximum packet holding time when an earlier transmitted packet is overtaken and a later transmitted packet arrives earlier among the plurality of sequenced transmitted packets, outputs data of the packets rearranged in the transmitted sequence if the overtaken packet arrives during the packet holding time, and gives up rearranging the packets in the transmitted sequence and outputs data of the held packet if the overtaken packet does not arrive during the packet holding time; and
data processing means that transmits the data of the packet output from the packet processing means.

7. The network apparatus according to claim 6, which is a radio access network apparatus which is included in a radio access network connected to a core network in the mobile communication system, and which receives a packet from the core network, and transmits data of the packet to a terminal,
wherein the packet processing means processes the packet from the core network and outputs the packet, and
the data processing means transmits the data of the packet output from the packet processing means to the terminal.

8. The network apparatus according to claim 6, wherein the packet processing means sets a packet holding time of a non-real time service to be longer than a packet holding time of a real time service.

9. The network apparatus according to claim 6, wherein the packet processing means sets a packet holding time of a streaming service to be longer than a packet holding time of a call service among real time services.

10. The network apparatus according to claim 6, wherein, when giving up rearranging the packets in the transmitted sequence in a real time service, the packet processing means outputs the held packet, and abandons the packet of a missing sequence number if it arrives afterwards.

11. A packet sequence control method in a mobile communication system which can provide a plurality of services of different service classes, comprising;
setting a packet holding time for holding an earlier arriving packet for every service class so as to await an earlier transmitted packet when restoring the sequence of the packets,
holding the earlier arriving packet up to the maximum packet holding time when an earlier transmitted packet is overtaken and a later transmitted packet arrives earlier, and
outputting data of the packets rearranged in the transmitted sequence if the overtaken packet arrives during the packet holding time, and giving up rearranging the packets in the transmitted sequence and outputting data of the held packet if the overtaken packet does not arrive during the packet holding time.
